# EUROPÄISCHE PATENTANMELDUNG

(11) **EP 2 003 563 A1**
(43) Veröffentlichungstag der Anmeldung: **17.12.2008**
(21) Anmeldenummer: 07010395.7
(22) Anmeldetag: 24.05.2007
(51) Int. Cl.: G06F 11/36

(54) **Verfahren zur Fenlersuche bei einem Automatisierungsgerätes**

(71) Anmelder: SIEMENS AKTIENGESELLSCHAFT, 80333 München (DE)
(72) Erfinder: Graw, Roland, 76479 Steinmauern (DE)

(57) **Zusammenfassung**

Es wird ein Verfahren zum Betrieb eines Automatisierungsgerätes (12) mit einem Speicher (24) und einer darin vorgehaltenen Automatisierungslösung (26) sowie ein nach dem Verfahren arbeitendes Automatisierungsgerät (12) angegeben, wobei sich bei Ausführung der Automatisierungslösung (26) durch eine Verarbeitungseinheit (32) des Automatisierungsgerätes (12) entsprechend einer Hierarchie von von der Automatisierungslösung (26) umfassten Funktionseinheiten (34 bis 46) für einen Aufruf jeder Funktionseinheit (34 bis 46) zumindest eine Aufrufreihenfolge (48) ergibt, wobei zum Testen der Automatisierungslösung (26) zumindest einer der von der Automatisierungslösung (26) umfassten Programmcodeanweisungen ein Unterbrechungspunkt (50) zugeordnet wird, das sich insbesondere dadurch auszeichnet, dass dem oder zumindest einem Unterbrechungspunkt (50) eine sich auf die Aufrufreihenfolge (48) derjenigen Funktionseinheit, der die Programmcodeanweisung zugehört, welcher der Unterbrechungspunkt (50) zugeordnet ist - "beobachtete Funktionseinheit" (40) -, beziehende Aufrufspezifikation zugeordnet wird und dass eine Ausführung der Automatisierungslösung (26) bei Erreichen des Unterbrechungspunktes (50) dann unterbrochen wird, wenn die Aufrufreihenfolge (48) der beobachteten Funktionseinheit (40) der dem Unterbrechungspunkt (50) zugeordneten Aufrufspezifikation entspricht.

## Beschreibung

Die Erfindung betrifft ein Verfahren zum Betrieb eines Automatisierungsgerätes, z. B. eines Automatisierungsgerätes oder eines Verbunds von Automatisierungsgeräten (Automatisierungssystem), wie dies bzw. diese in an sich bekannter Art und Weise zur Steuerung und/oder Überwachung eines technischen Prozesses bestimmt und vorgesehen sind.

Verfahren zum Betrieb solcher Automatisierungsgeräte sind allgemein bekannt. Zum Beispiel umfasst ein Automatisierungsgerät einen Speicher, in den eine Automatisierungslösung ladbar ist oder in dem eine solche Automatisierungslösung vorgehalten wird. Die Automatisierungslösung definiert in an sich bekannter Art und Weise durch davon umfasste Programmcodeanweisungen Ausmaß und Umfang, in der das Automatisierungsgerät oder das Automatisierungssystem den jeweiligen technischen Prozess steuert, regelt und/oder überwacht.

Eine Automatisierungslösung kann einen erheblichen Umfang und eine damit einhergehende Komplexität annehmen. Üblicherweise umfasst eine Automatisierungslösung zumindest ein Anwenderprogramm. Dann sind die Begriffe "Automatisierungslösung" und "Anwenderprogramm" synonym. Die Automatisierungslösung kann auch eine Mehrzahl von parallel (bei mehreren Automatisierungsgeräten), quasi-parallel (bei nur einem Automatisierungsgerät) oder sequentiell ausgeführten Anwenderprogrammen umfassen. Bei der Ausführung der Automatisierungslösung durch eine Verarbeitungseinheit, also z. B. einen Prozessor oder dergleichen, des Automatisierungsgerätes (oder mehrerer Automatisierungsgeräte) ergibt sich entsprechend einer Hierarchie von von der Automatisierungslösung umfassten Funktionseinheiten für den Aufruf jeder in der Automatisierungslösung verwendeten Funktionseinheit zumindest eine Aufrufreihenfolge für diese Funktionseinheit. Zur weiteren Verdeutlichung des Begriffs "Aufrufreihenfolge" wird nachfolgend auf eine Programmierumgebung Bezug genommen, wie sie üblicherweise bei der Programmierung von Automatisierungsgeräten in Form von speicherprogrammierbaren Steuerungen verwendet wird. Für derartige Automatisierungsgeräte vorgesehene Automatisierungslösungen umfassen so genannte Bausteine, z. B. Funktionsbausteine. Eine Automatisierungslösung kann dabei eine Vielzahl solcher Bausteine umfassen und im Folgenden wird für einfache Verhältnisse davon ausgegangen, dass eine exemplarische Automatisierungslösung z. B. zehn Bausteine, die nachfolgend als "Baustein1", "Baustein2", "Baustein3", ..., "Baustein10" bezeichnet sind, umfasst. Ein Aufruf eines Bausteins, z. B. ein Aufruf von Baustein10, erfolgt grundsätzlich aus einem anderen Baustein. Der Baustein, aus dem ein anderer Baustein aufgerufen wird, z. B. Baustein9, kann seinerseits aus einem anderen Baustein, z. B. Baustein3, aufgerufen worden sein. Für den Aufruf von Baustein10 ergibt sich für die vorstehend skizzierte Situation danach die Aufrufreihenfolge: "Baustein3, Baustein9". Für einzelne Bausteine einer Automatisierungslösung kann die Aufrufreihenfolge erheblich länger sein.

Weiter ist bei Automatisierungsgeräten der eingangs genannten Art bekannt, dass zum Testen der Automatisierungslösung zumindest einer der von der Automatisierungslösung umfassten Programmcodeanweisungen ein Unterbrechungspunkt, also ein so genannter "breakpoint", zugeordnet wird. Nach der an sich bekannten Funktionalität solcher Unterbrechungspunkte wird die Abarbeitung der Automatisierungslösung bei Erreichen des jeweiligen Unterbrechungspunktes angehalten, so dass ein Bediener die beim Erreichen des Unterbrechungspunktes sich ergebenden Zustände der Automatisierungslösung für eine eventuelle Fehlersuche oder für Diagnosezwecke auswerten kann.

Die Funktionalität solcher Unterbrechungspunkte ist allerdings insoweit noch nicht ganz optimal, als bei einer Untersuchung von in der Automatisierungslösung häufig verwendeten, d. h. häufig aufgerufenen Funktionseinheiten die Ausführung der Automatisierungslösungen bei jedem Erreichen eines solchen Unterbrechungspunktes angehalten wird, auch wenn eine Diagnose oder eine eventuelle Fehlersuche nur bei bestimmten Konstellationen der Automatisierungslösung relevant wird. Dies führt im Ergebnis dazu, dass eine für die Diagnose oder eventuelle Fehlersuche relevante Konstellation häufig erst mit erheblichem Zeitaufwand erreicht wird, nachdem die Ausführung der Automatisierungslösung nach einer Unterbrechung bei nicht relevanten Konstellationen manuell wieder gestartet wird. Abgesehen von dem zusätzlichen Zeitaufwand gehen dabei auch eventuelle dynamische Einflüsse verloren oder eine so häufige Unterbrechung der Ausführung der Automatisierungslösung ist bei einem bereits in Betrieb befindlichen Automatisierungsgerät für den jeweiligen technischen Prozess gar nicht vertretbar.

Systematische Lösungen für die vorstehend skizzierte Problematik sind nicht bekannt. Bisher hat man sich im Wesentlichen so zu behelfen versucht, dass anstelle eines einzelnen Unterbrechungspunktes - im Folgenden als ursprünglicher Unterbrechungspunkt bezeichnet - eine Mehrzahl von Unterbrechungspunkten definiert wird. Diese werden Funktionseinheiten zugeordnet, welche die Funktionseinheit aufrufen, die diejenige Programmcodeanweisung umfasst, der der ursprünglich einzige Unterbrechungspunkt zugeordnet war. Die Platzierung solcher zusätzlicher Unterbrechungspunkte wird dabei so vorgenommen, dass diese Funktionseinheiten zugeordnet werden, die quasi rückwärts einem Aufrufpfad für diejenige Funktionseinheit folgen, welche die Programmcodeanweisung umfasst, der der ursprüngliche Unterbrechungspunkt zugeordnet ist.

Zur Vereinfachung werden folgende Definitionen eingeführt: Als "beobachtete Programmcodeanweisung" wird diejenige Programmcodeanweisung bezeichnet, der ein Unterbrechungspunkt zugeordnet ist oder werden soll. Als "beobachtete Funktionseinheit" wird eine Funktionseinheit bezeichnet, die eine solche beobachtete Programmcodeanweisung umfasst.

Eine Aufgabe der Erfindung besteht darin, die oben genannten Nachteile bei der Diagnose oder Suche von eventuellen Fehlern in Automatisierungslösungen zu vermeiden oder zumindest zu verringern.

Diese Aufgabe wird erfindungsgemäß mit einem Verfahren mit den Merkmalen des Anspruchs 1 gelöst. Dazu ist zum Betrieb eines Automatisierungsgerätes der eingangs genannten Art insbesondere vorgesehen, dass dem oder zumindest einem Unterbrechungspunkt ein Datum oder Daten, das oder die im Folgenden zusammenfassend als Aufrufspezifikation bezeichnet sind, zugeordnet werden und dass eine Ausführung der Automatisierungslösung bei Erreichen des Unterbrechungspunktes dann unterbrochen wird, wenn die dem Unterbrechungspunkt zugeordnete Aufrufspezifikation zu einer bei Erreichen des Unterbrechungspunktes sich ergebenden Konstellation der Automatisierungslösung passt. Die Aufrufspezifikation bezieht sich dabei auf die Aufrufreihenfolge derjenigen Funktionseinheit, der die Programmcodeanweisung zugehört, welcher der Unterbrechungspunkt zugeordnet ist, also auf die Aufrufreihenfolge der beobachteten Funktionseinheit entsprechend der obigen Definition. Im Hinblick auf die Konstellation der Automatisierungslösung bei Erreichen des Unterbrechungspunktes wird überprüft, ob die Aufrufreihenfolge der jeweiligen Funktionseinheit, also der beobachteten Funktionseinheit, der dem Unterbrechungspunkt zugeordneten Aufrufspezifikation entspricht. Nur wenn dies der Fall ist, wird die Ausführung der Automatisierungslösung bei Erreichen des Unterbrechungspunktes unterbrochen. Für die Ausführung der Automatisierungslösung wird damit erreicht, dass diese nur bei Eintritt der durch die Aufrufspezifikation definierten Konstellation angehalten wird. Die Verwendung von Unterbrechungspunkten entsprechend dem von der Erfindung vorgeschlagenen Ansatz ermöglicht also erheblich schneller eine zielgerichtete Diagnose der jeweiligen Automatisierungslösung.

Die Aufrufspezifikation kann sich auf eine sich bei einem Aufruf der beobachteten Funktion entsprechend der jeweiligen Aufrufreihenfolge ergebende Situation, im einfachsten Falle auf die entsprechend der Aufrufreihenfolge involvierten Funktionseinheiten, beziehen. Entsprechend dem eingangs gewählten Beispiel für eine Aufrufreihenfolge kann als Aufrufspezifikation z. B. ein die Funktionseinheit _{"}Baustein3" referenzierender Bezeichner vorgegeben werden, so dass die beobachtete Funktionseinheit am davon umfassten Unterbrechungspunkt immer dann unterbrochen wird, wenn beim Aufruf der beobachteten Funktionseinheit entlang der Aufrufreihenfolge zumindest einmal die Funktionseinheit "Baustein3" beteiligt war. Auch die Position, innerhalb derer die oder jede durch die Aufrufspezifikation bezeichnete Funktionseinheit innerhalb der Aufrufreihenfolge vorkommt, spielt dabei keine Rolle. Allerdings kann im Sinne einer noch genaueren Definition der Situation, bei der die Ausführung der Automatisierungslösung bei Erreichen des Unterbrechungspunktes angehalten werden soll, in einer bevorzugten Ausführungsform auch eine Aufrufspezifikation vorgesehen sein, bei der die Reihenfolge der dabei festgelegten Funktionseinheiten durchaus eine Rolle spielt.

Der Vorteil der Erfindung besteht darin, dass eine Unterbrechung einer Ausführung einer Automatisierungslösung mit dem Ansatz gemäß der Erfindung sehr viel genauer spezifiziert werden kann. Durch die Verknüpfung eines Unterbrechungspunktes mit einer vorgebbaren Aufrufspezifikation kann z. B. vorgegeben werden, dass die jeweilige beobachtete Funktionseinheit an der beobachteten Programmcodeanweisung nur dann unterbrochen wird, wenn die beobachtete Funktionseinheit durch eine mittels Aufrufspezifikation angegebene Funktionseinheit mittelbar oder unmittelbar aufgerufen wird.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Beim Aufruf einer Funktionseinheit der oben genannten Art, z. B. den oben erwähnten Bausteinen, allgemeiner jeder Form von Funktionen, Routinen oder Unterprogrammen, werden in an sich bekannter Art und Weise Daten im Zusammenhang mit deren Aufruf in einem Stapelspeicher, dem so genannten _{"}stack", abgelegt. Gemäß einer bevorzugten Ausführungsform der Erfindung ist vorgesehen, dass die Überprüfung, ob die Aufrufreihenfolge der jeweiligen Funktionseinheit der dem Unterbrechungspunkt zugeordneten Aufrufspezifikation entspricht, anhand der im Stapelspeicher abgelegten Daten erfolgt. Im Stapelspeicher ist nämlich in an sich bekannter Art, um beim Ende der Ausführung einer Funktionseinheit zur aufrufenden Funktionseinheit zurückkehren zu können, und zwar genau zu der Programmcodeanweisung innerhalb der aufrufenden Funktionseinheit, die ursprünglich den Aufruf der jeweiligen Funktionseinheit bewirkt hat, eine Information im Hinblick auf eine Adresse dieser den Aufruf bewirkenden Programmcodeanweisung hinterlegt. Mit einer solchen Information, insbesondere einer Adressinformation, kann die Zugehörigkeit der aufrufenden Programmcodeanweisung zu einer bestimmten Funktionseinheit ermittelt werden. Mit dieser Information lässt sich ermitteln, aus welcher Funktionseinheit die beobachtete Funktionseinheit oder jede andere Funktionseinheit aufgerufen wird oder aufgerufen wurde. Wenn als Aufrufspezifikation zumindest ein Bezeichner gewählt wird, der eine Funktionseinheit spezifiziert, aus der die beobachtete Funktionseinheit mittelbar oder unmittelbar aufgerufen wird oder aufgerufen werden soll, lässt sich eine Entsprechung der tatsächlichen Aufrufreihenfolge der beobachteten Funktionseinheit mit der dem Unterbrechungspunkt zugeordneten Aufrufspezifikation durch Auswertung und ggf. Zwischenverarbeitung der im Stapelspeicher abgelegten Daten erhalten.

Bevorzugt kann, wie oben schon erwähnt, vorgesehen sein, dass von der Aufrufspezifikation eine Angabe zumindest einer Funktionseinheit umfasst ist, die beim Aufruf der Funktionseinheit, dem die Programmcodeanweisung zugehört, der der Unterbrechungspunkt zugeordnet ist, also der beobachteten Funktionseinheit, von dem jeweiligen Aufrufpfad umfasst sein soll. Weiter bevorzugt kann auch vorgesehen sein, dass von der Aufrufspezifikation eine Angabe einzelner Funktionseinheiten umfasst ist, die beim Aufruf der beobachteten Funktionseinheit von dem jeweiligen Aufrufpfad nicht umfasst sein soll. Nochmals weiter bevorzugt kann auch vorgesehen sein, dass die Aufrufspezifikation eine Angabe einzelner oder mehrerer solcher Funktionseinheiten umfasst, die vom jeweiligen Aufrufpfad entweder umfasst oder nicht umfasst sein sollen. Durch die Möglichkeit einer Vorgabe mehrerer Funktionseinheiten, die vom Aufrufpfad umfasst sein sollen, lässt sich die Unterbrechung der Ausführung der Automatisierungslösung beim Erreichen des Unterbrechungspunktes noch genauer spezifizieren. Durch die Möglichkeit hinsichtlich der vom Aufrufpfad umfassten Funktionseinheiten auch ein "Negativkriterium" anzugeben, den Unterbrechungspunkt also quasi zu deaktivieren, sobald vom Aufrufpfad eine bestimmte Funktionseinheit umfasst ist, erweitert sich die Flexibilität bei der genauen Spezifikation eines Unterbrechungspunktes erheblich.

Eine weitere Genauigkeit bei der Spezifikation des Unterbrechungspunktes ergibt sich, wenn die Aufrufspezifikation neben den Funktionseinheiten, die vom jeweiligen Aufrufpfad umfasst oder nicht umfasst sein sollen, auch Angaben hinsichtlich deren Reihenfolge umfasst. Dann wird der Unterbrechungspunkt nur dann aktiv, wenn die beobachtete Funktionseinheit durch die mittels der Aufrufspezifikation vorgegebenen Funktionseinheiten in genau der vorgegebenen Aufrufreihenfolge aufgerufen wird. Dabei meint der Begriff "Aufrufreihenfolge" noch nicht, dass, wenn die Aufrufspezifikation sich z. B. auf die Funktionseinheiten "Baustein7", "Baustein3", "Baustein9" in dieser Reihenfolge bezieht, der Unterbrechungspunkt nur dann aktiv wird, wenn die Funktionseinheit _{"}Baustein7" unmittelbar die Funktionseinheit _{"}Baustein3", diese ihrerseits unmittelbar die Funktionseinheit _{"}Baustein9" und letztere wiederum unmittelbar die beobachtete Funktionseinheit aufruft, sondern es kommt nur darauf an, dass die Reihenfolge grundsätzlich eingehalten wird. Ein eventueller Aufruf weiterer Funktionseinheiten zwischen den durch die Aufrufspezifikation definierten Funktionseinheiten bleibt ohne Einfluss auf die Aktivierung des Unterbrechungspunktes.

Eine nochmals erweiterte Flexibilität oder Genauigkeit bei der Spezifikation eines Unterbrechungspunktes ergibt sich, wenn die Aufrufspezifikation auch logische Verknüpfungen der Funktionseinheiten umfasst, die vom jeweiligen Aufrufpfad entweder umfasst oder nicht umfasst sein sollen. Damit lässt sich ein Unterbrechungspunkt z. B. aktivieren, wenn der jeweilige Aufrufpfad für die beobachtete Funktionseinheit einer Bedingung wie folgt genügt: (Baustein3 ODER Baustein7) UND NICHT Baustein5; Baustein3; NICHT Baustein7; Baustein1 ODER Baustein5.

Eine alternative oder zusätzliche Möglichkeit zur Vorgabe der Aufrufspezifikation besteht darin, dass dafür eine Aufrufreihenfolge mit einem zumindest abschnittsweise vollständigen Aufrufpfad verwendet wird. Bei einem abschnittsweise vollständigen Aufrufpfad ist abweichend von der weiter oben geschilderten Situation eine Aktivierung eines Unterbrechungspunktes nur dann gegeben, wenn die als Aufrufspezifikation zu einem abschnittsweise vollständigen Aufrufpfad übergebenen Informationen mit einem Abschnitt des tatsächlichen Aufrufpfads genau übereinstimmen. Ein abschnittsweise vollständiger Aufrufpfad gibt danach bei einer Definition wie "Baustein7, Baustein3, Baustein9" also an, dass der Aufruf der vom abschnittsweise vollständigen Aufrufpfad umfassten Funktionseinheiten jeweils unmittelbar erfolgt. Ein tatsächlicher Aufrufpfad Baustein7, Baustein3, Baustein7, Baustein9 führt also für den oben angegebenen abschnittsweise vollständigen Aufrufpfad als Aufrufspezifikation nicht zu einer Aktivierung des jeweiligen Unterbrechungspunktes. Dies ist die im Rahmen des durch die Erfindung verfolgten Ansatzes genaueste Möglichkeit zur Definition eines Unterbrechungspunktes. Der abschnittsweise vollständige Aufrufpfad kann auch den vollständigen Aufrufpfad umfassen und so die Aktivierung eines Unterbrechungspunktes in der genauest möglichen Form beschreiben.

Für Situationen, bei denen eine Funktionseinheit eine andere Funktionseinheit von mehreren Positionen, also den den jeweiligen Aufruf repräsentierenden Programmcodeanweisungen, aus aufruft, kann vorgesehen sein, dass der Aufrufpfad nicht nur die jeweiligen Funktionseinheiten sondern auch die Adresse der den Aufruf codierenden Programmcodeanweisung umfasst. Die Ergänzung der Funktionseinheit um eine Programmcodeanweisung kann sich auf jede Form der Aufrufspezifikation beziehen.

Bevorzugt umfasst ein abschnittsweise vollständiger Aufrufpfad zumindest ein jeweiliges Pfadende beim Aufruf der beobachteten Funktionseinheit, also eine Spezifikation derjenigen Funktionseinheit, die die beobachtete Funktionseinheit unmittelbar aufruft oder aufrufen soll.

Zur Gewährleistung zusätzlicher Flexibilität bei der Verwendung abschnittsweise vollständiger Aufrufpfade als Aufrufspezifikation kann gemäß einer weiter bevorzugten Ausführungsform vorgesehen sein, dass innerhalb des abschnittsweise vollständigen Aufrufpfades hinsichtlich einzelner oder mehrerer aufgerufener oder nicht aufgerufener bzw. aufzurufender oder nicht aufzurufender Funktionseinheiten eine Platzhalterkennzeichnung umfasst ist. Diese Platzhalterkennzeichnung eröffnet stückweise die Flexibilität der eingangs beschriebenen Möglichkeit zur Spezifikation des Unterbrechungspunktes. Anders als bei der eingangs beschriebenen Alternative kann eine Platzhalterkennzeichnung jedoch nur als Vertreter für genau eine aufgerufene, aufzurufende, nicht aufgerufene oder nicht aufzurufende Funktionseinheit stehen. Insoweit kann die Tiefe des jeweiligen tatsächlichen Aufrufpfades in die Spezifikation der Aufrufdaten einfließen. Selbstverständlich kann der abschnittsweise vollständige Aufrufpfad eine Mehrzahl solcher Platzhalterkennzeichnungen umfassen, so dass bei einer bedarfsgerechten Auswahl der oben skizzierten Alternativen oder deren Kombination eine maximale Flexibilität bei der Spezifikation von Unterbrechungspunkten gegeben ist.

Die Aktivierung eines Unterbrechungspunktes während der Ausführung einer Automatisierungslösung, also die Unterbrechung der Ausführung der Automatisierungslösung bei Erreichen des jeweiligen Unterbrechungspunktes, erfolgt in an sich bekannter Art und Weise unter Kontrolle eines dafür vorgesehenen Programms, das üblicherweise als "Debugger" oder dergleichen bezeichnet wird. Das erfindungsgemäße Verfahren und/oder dessen Ausgestaltungen sind üblicherweise in Software implementiert und insoweit z. B. Bestandteil eines solchen Debuggers. Entsprechend bezieht sich die Erfindung auch auf ein Computerprogramm mit durch einen Computer ausführbaren Programmcodeanweisungen zur Implementierung des oben beschriebenen oder nachfolgend weiter erläuterten Verfahrens, wenn das Computerprogramm auf einem Computer, insbesondere einem Automatisierungsgerät der eingangs genannten Art, ausgeführt wird, also z. B. einen solchen Debugger, der um die Funktionalität des erfindungsgemäßen Verfahrens sowie ggf. dessen Ausgestaltungen ergänzt ist.

Weiter bezieht sich die Erfindung auch auf ein Computerprogrammprodukt, insbesondere ein Speichermedium, also z. B. einen Speicherbaustein nach Art eines ((E)E)PROM oder dergleichen oder übliche Datenträger, wie z. B. Diskette, CD usw., mit einem durch einen Computer, insbesondere ein Automatisierungsgerät, ausführbaren derartigen Computerprogramm.

Schließlich bezieht sich die Erfindung, nachdem diese im Betrieb auf einem Automatisierungsgerät oder einem mit dem Automatisierungsgerät kommunikativ verbundenen oder verbindbaren weiteren Automatisierungsgerät, z. B. einem so genannten Programmiergerät, implementiert und dort von einem menschlichen Benutzer verwendet wird, auch auf ein solches Automatisierungsgerät mit einem Computerprogrammprodukt, wie oben beschrieben.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die z. B. durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Darin zeigen
- FIG 1: eine schematisch vereinfachte Darstellung eines Automatisierungssystems,
- FIG 2: eine schematisch vereinfachte Darstellung eines durch das Automatisierungssystem ausführbaren Anwenderprogramms,
- FIG 3: eine graphische Darstellung einer Aufrufreihenfolge von von dem Anwenderprogramm umfassten Funktionseinheiten,
- FIG 4: eine alternative Darstellung der Aufrufreihenfolge gemäß FIG 3 und
- FIG: 5 ein Anwenderprogramm mit einem Unterbrechungspunkt.

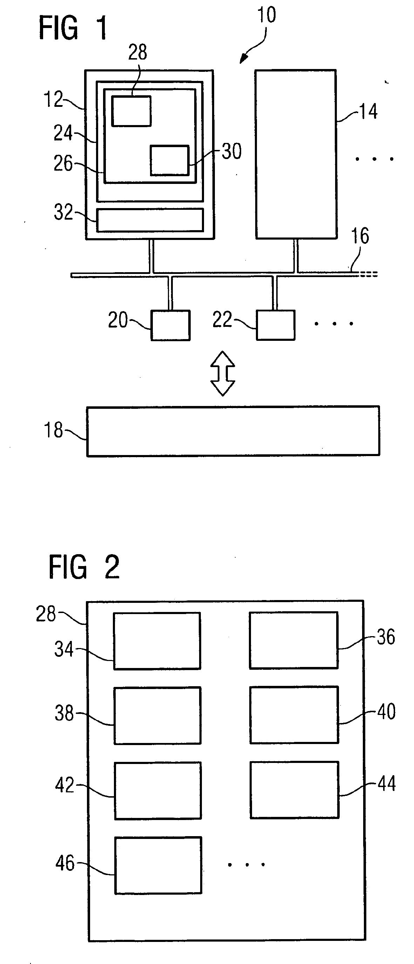

FIG 1 zeigt in schematisch vereinfachter Darstellung ein Automatisierungssystem 10, das zumindest ein Automatisierungsgerät 12 und ggf. weitere Automatisierungsgeräte 14 umfasst. Bei einer Mehrzahl von Automatisierungsgeräten 12, 14 sind diese in an sich bekannter Art kommunikativ, z. B. über einen Bus 16, miteinander und mit zur Steuerung und/oder Überwachung eines nicht näher dargestellten technischen Prozesses 18 vorgesehener Prozessperipherie 20, 22 verbunden. Das oder jedes Automatisierungsgerät 12, 14 umfasst zumindest einen Speicher 24, in dem eine Automatisierungslösung 26, durch welche Art und Umfang der Steuerung, Regelung oder Überwachung des technischen Prozesses 18 durch das Automatisierungssystem 10 oder das Automatisierungsgerät 12 näher definiert ist, vorgehalten wird. Eines der Automatisierungsgeräte 12, 14 kann dabei als Programmiergerät fungieren, auf dem das Verfahren gemäß der Erfindung oder bevorzugter Ausführungsformen implementiert ist. Ansonsten besteht auch die Möglichkeit, dass ein nicht dargestelltes Programmiergerät in an sich bekannter Art und Weise temporär mit dem Automatisierungssystem 10 verbunden wird, z. B. über den Bus 16.

Die Automatisierungslösung 26 umfasst zumindest ein Anwenderprogramm 28, 30 mit benutzerspezifischen Vorgaben für die Steuerung, Regelung oder Überwachung des technischen Prozesses 18, also ein anwendungsspezifisches Steuerprogramm. Zur Ausführung der Automatisierungslösung 26, insbesondere des oder jedes davon umfassten Anwenderprogramms 28, 30, ist in an sich bekannter Art und Weise eine Verarbeitungseinheit 32, z. B. ein Prozessor oder dergleichen, vorgesehen.

FIG 2 zeigt eine schematisch vereinfachte, exemplarische Darstellung des Anwenderprogramms 28 aus FIG 1. Danach umfasst das Anwenderprogramm 28 eine Anzahl von Funktionseinheiten 34, 36, 38, 40, 42, 44, 46, wobei Größe, Anordnung und Verteilung der dargestellten Funktionseinheiten 34 bis 46 bei der schematischen Darstellung in FIG 2 ohne Belang sind. Bei den Funktionseinheiten 34 bis 46 handelt es sich um Organisationsformen von von dem Anwenderprogramm 28 umfassten Programmcodeanweisungen. Jede Funktionseinheit 34 bis 46 stellt quasi ein Programm innerhalb des Anwenderprogramms 28 dar und wird entsprechend häufig auch als Unterprogramm, Funktion, Routine oder dergleichen bezeichnet. Hier und im Folgenden wird der Begriff _{"}Funktionseinheit" als Oberbegriff für alle Organisationsformen der vorstehend genannten Art von Programmcodeanweisungen innerhalb eines Anwenderprogramms 28 verwendet. Bei Automatisierungsgeräten 12, 14 üblicherweise verwendete Programmierumgebungen bezeichnen solche Funktionseinheiten 34 bis 46 auch als Bausteine, insbesondere Funktionsbausteine. Entsprechend werden die Begriffe Baustein und Funktionseinheit ggf. synonym verwendet.

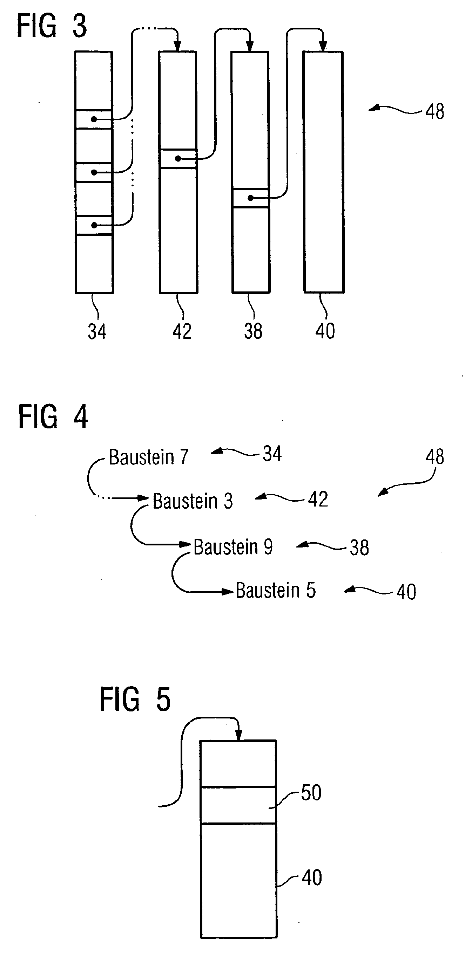

FIG 3 versucht graphisch zu verdeutlichen, dass zur Ausführung einer ersten Funktionseinheit 40, im Folgenden zur Unterscheidung als "beobachtete Funktionseinheit" 40 bezeichnet, deren Aufruf aus einer anderen Funktionseinheit, im Folgenden zur Unterscheidung als unmittelbar aufrufende Funktionseinheit 38 bezeichnet, erforderlich ist. Zur Ausführung von von der unmittelbar aufrufenden Funktionseinheit 38 umfassten Programmcodeanweisungen und letztlich zur Ausführung der aufrufenden Programmcodeanweisung - als Ursprung des den Aufruf verdeutlichenden Pfeils graphisch hervorgehoben - kann der Aufruf der unmittelbar aufrufenden Funktionseinheit 38 durch eine weitere Funktionseinheit, im Folgenden zur weiteren Unterscheidung als aufrufende Funktionseinheit 42 bezeichnet, erforderlich sein. Ähnliches gilt in Bezug auf die aufrufende Funktionseinheit 42, bis schließlich entlang einer umgekehrten Betrachtung einer sich dabei ergebenden Aufrufhierarchie oder Aufrufreihenfolge eine Funktionseinheit 34 bis 46 erreicht ist, die im Folgenden zur Unterscheidung als Basisfunktionseinheit 34 bezeichnet ist, aus der mittelbar oder unmittelbar alle anderen Funktionseinheiten 36 bis 46 aufgerufen werden.

Auf eine Aufrufhierarchie der in FIG 3 schematisch vereinfacht dargestellten Art wird im Folgenden unter dem Begriff _{"}Aufrufreihenfolge" und der Bezugsziffer 48 Bezug genommen.

Eine andere Darstellung der Aufrufreihenfolge 48 gemäß FIG 3 zeigt FIG 4. Dabei sind die einzelnen Funktionseinheiten 34 bis 4,6 anhand einer in der Automatisierungslösung 26 verwendbaren Klartextbezeichnung z. B. mit _{"}Baustein1", _{"}Baustein2", ... _{"}Baustein n" bezeichnet. Die konkrete Abfolge der von einer Aufrufreihenfolge 48 umfassten Funktionseinheiten 34 bis 46 wird auch als Aufrufpfad bezeichnet. Der Aufrufpfad zu der in FIG 4 dargestellten Aufrufreihenfolge 48 lautet entsprechend "Baustein7, Baustein3, Baustein9, Baustein5", wobei die Funktionseinheit 34 bis 46 mit der Bezeichnung "Baustein5" die beobachtete Funktionseinheit 40 ist. Je nach Betrachtungsweise kann vorgesehen sein, dass die beobachtete Funktionseinheit 40 von der Darstellung der Aufrufreihenfolge/des Aufrufpfads umfasst oder nicht umfasst ist.

Die Erfindung sieht nun vor, wie anhand FIG 5 schematisch dargestellt wird, dass, wenn zum Testen der Automatisierungslösung 26 (FIG 1) zumindest einer der von der beobachteten Funktionseinheit 40 als Teil der Automatisierungslösung 26 umfassten Programmcodeanweisungen ein Unterbrechungspunkt 50 zugeordnet ist, diesem Unterbrechungspunkt 50 als Aufrufspezifikation z. B. eine vorgebbare Aufrufreihenfolge 48 zugeordnet wird, derart, dass eine Ausführung der Automatisierungslösung 26 bei Erreichen des Unterbrechungspunktes 50 dann und nur dann unterbrochen wird, wenn die tatsächliche Aufrufreihenfolge 48 der beobachteten Funktionseinheit 40 der dem Unterbrechungspunkt 50 zugeordneten Aufrufspezifikation entspricht.

Für die Aufrufspezifikation kann vorgesehen sein, dass z. B. die unmittelbar aufrufende Funktionseinheit 38 (vgl. FIG 3) angegeben wird. Wenn dann bei der Ausführung der Automatisierungslösung 26 die beobachtete Funktionseinheit 40 von einer anderen als der in der Aufrufspezifikation definierten unmittelbar aufrufenden Funktionseinheit 38 aufgerufen wird, ist bei Erreichen des Unterbrechungspunktes 50 die Bedingung nicht erfüllt, dass die tatsächliche Aufrufreihenfolge 48 der dem Unterbrechungspunkt 50 zugeordneten Aufrufspezifikation entspricht. Eine Unterbrechung der Ausführung der Automatisierungslösung 26 beim Erreichen des Unterbrechungspunktes 50 in dieser Situation findet entsprechend nicht statt. Wenn zu einem anderen Zeitpunkt der Aufruf der beobachteten Funktionseinheit 40 aus der in der Aufrufspezifikation als unmittelbar aufrufende Funktionseinheit 38 definierten Funktionseinheit erfolgt, ist der Unterbrechungspunkt 50 quasi "aktiv" und die Ausführung der Automatisierungslösung 26 wird bei Erreichen des Unterbrechungspunktes 50 angehalten.

Um im Betrieb des Automatisierungsgerätes 12 erkennen zu können, ob eine tatsächliche Aufrufreihenfolge 48 der beobachteten Funktionseinheit 40 der einem Unterbrechungspunkt 50 zugeordneten Aufrufspezifikation entspricht, werden Daten, die in an sich bekannter Art und Weise im Zusammenhang mit Aufrufen von Funktionseinheiten 34 bis 46 in einem so genannten Stapelspeicher ("stack"; nicht dargestellt) abgelegt werden, bei der Überprüfung, ob die Aufrufreihenfolge 48 der beobachteten Funktionseinheit 40 der dem Unterbrechungspunkt 50 zugeordneten Aufrufspezifikation entspricht, ausgewertet. Dazu ist z. B. im Zusammenhang mit einem so genannten Stackvergleich ggf. ein Zugriff auf eine Tabelle mit absoluten Adressen für die einzelnen Funktionseinheiten 34 bis 46 und die davon umfassten Programmcodeanweisungen erforderlich. Der Stackvergleich basiert auf (maschinencodeabhängigen) Absolutadressen, in die eine z. B. graphisch erzeugte Aufrufspezifikation zuvor umgesetzt wurde.

Die konkrete Aufrufspezifikation kann variieren, wie im allgemeinen Beschreibungsteil erläutert. Dabei sind auch beliebige Kombinationen der dort erläuterten Alternativen möglich, um eine große Flexibilität bei der Definition einer Aufrufspezifikation zu eröffnen oder um eine Aufrufspezifikation so exakt wie möglich zu definieren, so dass ein Unterbrechungspunkt 50 nur dann aktiv ist, also nur dann zum Anhalten der Ausführung der Automatisierungslösung 26 führt, wenn die tatsächliche Aufrufreihenfolge 48 genau oder zumindest abschnittsweise der vorgegebenen Aufrufspezifikation entspricht.

Eine Aufrufspezifikation kann vorzugsweise aus einer jeweils verwendeten Programmierumgebung heraus generiert werden oder alternativ im Debugger in einer konkreten Testsituation generiert und/oder gespeichert werden. Eine oder mehrere Aufrufspezifikationen können auch, insbesondere zusammen mit einer vorgebbaren Beschreibung, archiviert werden, z. B. in einem dazu auf Seiten des Programmiergeräts vorgesehenen Speicher oder Speicherbereich, mit dem Vorteil einer Wiederverwendbarkeit in einer späteren _{"}Debugsitzung".

Des Weiteren kann vorgesehen sein, dass eine oder einzelne Aufrufspezifikationen, die jeweils selbst nach Art eines Triggerkriteriums fungieren, mit anderen, gebräuchlichen Triggerkriterien kombiniert werden. Als Beispiel für ein solches gebräuchliches Triggerkriterium mag stellvertretend eine _{"}Untersetzung" stehen, das bei Anwendung im Zusammenhang mit einem Unterbrechungspunkt bewirkt, dass die Ausführung nur bei jedem mit dem Untersetzungsverhältnis korrespondierenden Erreichen des Unterbrechungspunktes tatsächlich unterbrochen wird. Als weiteres Triggerkriterium kann ein vorgegebener Inhalt einer vorgegebenen Speicherstelle usw. dienen. Wenn die Aufrufspezifikation mit einzelnen oder mehreren derartigen zusätzlichen Triggerkriterien kombiniert wird, ist eine nochmals gesteigerte Flexibilität bei der Spezifikation eines Unterbrechungspunktes gegeben.

Zusammenfassend lässt sich die Erfindung damit wie folgt beschreiben: Es wird ein Verfahren zum Betrieb eines Automatisierungsgerätes 12 mit einem Speicher 24 und einer darin vorgehaltenen Automatisierungslösung 26 sowie ein nach dem Verfahren arbeitendes Automatisierungsgerät 12 angegeben, wobei sich bei Ausführung der Automatisierungslösung 26 durch eine Verarbeitungseinheit 32 des Automatisierungsgerätes 12 entsprechend einer Hierarchie von von der Automatisierungslösung 26 umfassten Funktionseinheiten 34 bis 46 für einen Aufruf jeder Funktionseinheit 34 bis 46 zumindest eine Aufrufreihenfolge 48 ergibt, wobei zum Testen der Automatisierungslösung 26 zumindest einer der von der Automatisierungslösung 26 umfassten Programmcodeanweisungen ein Unterbrechungspunkt 50 zugeordnet wird, das sich insbesondere dadurch auszeichnet, dass dem oder zumindest einem Unterbrechungspunkt 50 eine sich auf die Aufrufreihenfolge 48 derjenigen Funktionseinheit, der die Programmcodeanweisung zugehört, welcher der Unterbrechungspunkt 50 zugeordnet ist - "beobachtete Funktionseinheit" 40 -, beziehende Aufrufspezifikation zugeordnet wird und dass eine Ausführung der Automatisierungslösung 26 bei Erreichen des Unterbrechungspunktes 50 dann unterbrochen wird, wenn die Aufrufreihenfolge 48 der beobachteten Funktionseinheit 40 der dem Unterbrechungspunkt 50 zugeordneten Aufrufspezifikation entspricht.

## Patentansprüche

1. Verfahren zum Betrieb eines Automatisierungsgerätes (12) mit einem Speicher (24) und einer darin vorgehaltenen Automatisierungslösung (26),
bei deren Ausführung durch eine Verarbeitungseinheit (32) des Automatisierungsgerätes (12) sich entsprechend einer Hierarchie von von der Automatisierungslösung (26) umfassten Funktionseinheiten (34 bis 46) für einen Aufruf jeder Funktionseinheit (34 bis 46) zumindest eine Aufrufreihenfolge (48) ergibt und
wobei zum Testen der Automatisierungslösung (26) zumindest einer der von der Automatisierungslösung (26) umfassten Programmcodeanweisungen ein Unterbrechungspunkt (50) zugeordnet wird,
**dadurch gekennzeichnet,**
**dass** dem oder zumindest einem Unterbrechungspunkt (50) eine sich auf die Aufrufreihenfolge (48) derjenigen Funktionseinheit, der die Programmcodeanweisung zugehört, welcher der Unterbrechungspunkt (50) zugeordnet ist - "beobachtete Funktionseinheit" (40) -, beziehende Aufrufspezifikation zugeordnet wird und
**dass** eine Ausführung der Automatisierungslösung (26) bei Erreichen des Unterbrechungspunktes (50) dann unterbrochen wird, wenn die Aufrufreihenfolge (48) der beobachteten Funktionseinheit (40) der dem Unterbrechungspunkt (50) zugeordneten Aufrufspezifikation entspricht.

2. Verfahren nach Anspruch 1, wobei beim Aufruf einer Funktionseinheit (34 bis 46) Daten im Zusammenhang mit deren Aufruf in einem Stapelspeicher abgelegt werden und wobei die Überprüfung, ob die Aufrufreihenfolge (48) der beobachteten Funktionseinheit (40) der dem Unterbrechungspunkt (50) zugeordneten Aufrufspezifikation entspricht, anhand der im Stapelspeicher abgelegten Daten erfolgt.

3. Verfahren nach Anspruch 1 oder 2, wobei die Aufrufspezifikation eine Angabe einzelner oder mehrerer Funktionseinheiten (34 bis 46) umfasst, die beim Aufruf der beobachteten Funktionseinheit (40) von einem die jeweilige Aufrufreihenfolge (48) darstellenden Aufrufpfad entweder umfasst oder nicht umfasst sein sollen.

4. Verfahren nach Anspruch 3, wobei die Aufrufspezifikation neben den Funktionseinheiten (34 bis 46), die vom jeweiligen Aufrufpfad entweder umfasst oder nicht umfasst sein sollen, auch Angaben hinsichtlich deren Reihenfolge umfasst.

5. Verfahren nach Anspruch 3 oder 4, wobei die Aufrufspezifikation logische Verknüpfungen der Funktionseinheiten (34 bis 46), die vom jeweiligen Aufrufpfad entweder umfasst oder nicht umfasst sein sollen, umfasst.

6. Verfahren nach Anspruch 1 oder 2, wobei als Aufrufspezifikation eine Aufrufreihenfolge (48) mit einem zumindest abschnittsweise vollständigen Aufrufpfad verwendet wird.

7. Verfahren nach Anspruch 6, wobei als abschnittsweise vollständiger Aufrufpfad ein zumindest ein Pfadende umfassender Aufrufpfad verwendet wird.

8. Verfahren nach Anspruch 6 oder 7, wobei der abschnittsweise vollständige Aufrufpfad hinsichtlich einzelner oder mehrerer aufgerufener oder nicht aufgerufener bzw. aufzurufender oder nicht aufzurufender Funktionseinheiten (34 bis 46) eine Platzhalterkennzeichnung umfasst.

9. Computerprogramm mit durch einen Computer ausführbaren Programmcodeanweisungen zur Implementierung des Verfahrens nach einem der Ansprüche 1 bis 8, wenn das Computerprogramm auf einem Computer, insbesondere einem Automatisierungsgerät (12), ausgeführt wird.

10. Computerprogrammprodukt, insbesondere Speichermedium, mit einem durch einen Computer, insbesondere ein Automatisierungsgerät (12), ausführbaren Computerprogramm gemäß Anspruch 9.

11. Automatisierungsgerät mit einem Computerprogrammprodukt gemäß Anspruch 10.
